(19) Europäisches Patentamt
European Patent Office
Office européen des brevets

(11) **EP 3 102 471 B1**

(12) **FASCICULE DE BREVET EUROPEEN**

(45) Date de publication et mention de la délivrance du brevet:
**08.12.2021 Bulletin 2021/49**

(21) Numéro de dépôt: **15705635.9**

(22) Date de dépôt: **15.01.2015**

(51) Int Cl.:
*B60W 40/08* (2012.01)   *B60K 28/06* (2006.01)
*B60W 50/14* (2020.01)   *G06F 17/18* (2006.01)

(86) Numéro de dépôt international:
**PCT/FR2015/050097**

(87) Numéro de publication internationale:
**WO 2015/118240 (13.08.2015 Gazette 2015/32)**

(54) **PROCÉDÉ D'ÉVALUATION DE LA VIGILANCE D'UN CONDUCTEUR DE VÉHICULE**

VERFAHREN ZUR BESTIMMUNG DER WACHSAMKEIT EINES FAHRZEUGFAHRERS

METHOD FOR EVALUATION OF THE VIGILANCE OF A VEHICLE DRIVER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.02.2014 FR 1450938**

(43) Date de publication de la demande:
**14.12.2016 Bulletin 2016/50**

(73) Titulaire: **Renault S.A.S.**
**92100 Boulogne-Billancourt (FR)**

(72) Inventeur: **ILLY, Hervé**
**92190 Meudon (FR)**

(56) Documents cités:
EP-A1- 2 472 493     JP-A- 2001 273 594
US-A1- 2013 144 491     US-A1- 2014 039 722

- **DEVASHISH DAS ET AL: "Differentiating Alcohol-Induced Driving Behavior Using Steering Wheel Signals", IEEE TRANSACTIONS ON INTELLIGENT TRANSPORTATION SYSTEMS, IEEE, PISCATAWAY, NJ, USA, vol. 13, no. 3, 1 septembre 2012 (2012-09-01), pages 1355-1368, XP011459161, ISSN: 1524-9050, DOI: 10.1109/TITS.2012.2188891**
- **JING YANG ET AL: "Driver distraction detection for vehicular monitoring", IECON 2010 - 36TH ANNUAL CONFERENCE ON IEEE INDUSTRIAL ELECTRONICS SOCIETY, IEEE, PISCATAWAY, NJ, USA, 7 novembre 2010 (2010-11-07), pages 108-113, XP031840286, ISBN: 978-1-4244-5225-5**

**Description**

L'invention concerne un procédé et un dispositif d'évaluation de la vigilance d'un conducteur de véhicule, un programme d'ordinateur pour mettre en œuvre le procédé et un véhicule automobile équipé du dispositif d'évaluation de la vigilance d'un conducteur.

Le document EP2160313 divulgue par exemple déjà un dispositif et procédé d'aide à la conduite de véhicule et le véhicule ainsi équipé. Le procédé divulgué s'appuie sur des distributions statistiques chacune sur une quantité différente d'erreurs de prédiction d'angle volant. Une distribution statistique y est mise à jour en relation avec une occurrence de classe par ajout de l'inverse de la quantité associée à la distribution puis multiplication par un facteur d'oubli de façon à amoindrir l'effet des occurrences au fur et à mesure de leur ancienneté.

Les erreurs de prédiction d'angle volant y constituent des erreurs de paramètre représentatif du contrôle du véhicule par le conducteur. D'autres paramètres que ceux associés à une prédiction d'angle volant peuvent être envisagés comme par exemple ceux mentionnés dans l'art antérieur mentionné par le document EP2472493, en relation avec une détection de franchissement de ligne sur la chaussée par caméra ou avec une détection de mouvement transversal du véhicule par accéléromètre.

Le document US 2014/039722 divulgue un autre exemple de procédé et de dispositif d'évaluation de la vigilance d'un conducteur de véhicule.

De nombreux problèmes sont posés par l'état antérieur de la technique, notamment celui de limiter l'influence des occurrences sur chaque distribution rigoureusement à la quantité qui y est associée, notamment aussi celui d'attribuer un poids identique à l'influence de chaque occurrence tant qu'elle fait partie de la quantité de celles de la distribution considérée, de façon à ce que la distribution statistique reflète le plus fidèlement possible ce qu'elle mesure. Les économies de ressources en termes de traitement de données, inhérentes aux ordinateurs embarqués sur des véhicules, amènent des contraintes supplémentaires pour apporter des solutions industrielles à ces problèmes.

Pour remédier aux problèmes de l'état antérieur de la technique, l'invention a pour objet un procédé d'évaluation de la vigilance d'un conducteur de véhicule à partir d'au moins une distribution statistique sur une quantité d'erreurs de paramètre représentatif du contrôle du véhicule par le conducteur appartenant chacune à une classe au sein d'un ensemble de classes comportant une classe moyenne, caractérisé en ce qu'il comprend des étapes consistant à :

- augmenter une densité de probabilité associée à une classe à laquelle appartient une erreur de paramètre qui se présente à un instant courant ;
- diminuer ladite densité de probabilité associée à la classe à un instant ultérieur après avoir observé ladite quantité d'erreurs de paramètres.

Avantageusement, le procédé comprend des étapes consistant à :

- lorsque ladite classe présentée n'est pas égale à ladite classe moyenne ;
- augmenter au moins une première longueur commune à un premier registre à décalage de longueur variable et à un deuxième registre à décalage de longueur variable lorsque se présente ladite erreur de paramètre appartenant à ladite classe présentée ;
- entrer en tête dudit premier registre un indice de ladite classe présentée et en tête dudit deuxième registre un indicateur initial de date.

Particulièrement, le procédé comprend une étape consistant à :

- décaler les cellules des registres à décalage lorsque ladite classe présentée n'est pas égale à ladite classe moyenne;
- augmenter d'une unité le contenu des cellules du deuxième registre à décalage sans modifier le contenu des cellules du premier registre à décalage lorsque ladite classe présentée est égale à ladite classe moyenne.

Plus particulièrement, ladite densité de probabilité associée à ladite classe est :

- augmentée en lui ajoutant une valeur inverse de ladite quantité d'erreurs de paramètre ; et
- diminuée à un instant ultérieur en lui retranchant ladite valeur inverse de la quantité d'erreurs de paramètre.

De préférence lesdites erreurs de paramètre représentatif du contrôle du véhicule par le conducteur sont des erreurs de prédictions d'angles d'un volant de direction.

L'invention a aussi pour objet un programme d'ordinateur comprenant des instructions de code de programme pour l'exécution des étapes du procédé selon l'invention lorsque ledit programme est exécuté sur un ordinateur.

L'invention a encore pour objet un dispositif d'évaluation de la vigilance d'un conducteur de véhicule au moyen d'un capteur de paramètre représentatif du contrôle du véhicule par le conducteur, caractérisé en ce qu'il comprend un ordinateur embarqué sur lequel est installé un programme selon l'invention.

L'invention a enfin pour objet un véhicule automobile caractérisé en ce qu'il comporte un dispositif selon l'invention.

D'autres caractéristiques et avantages de l'invention apparaitront au cours de la lecture de la description détaillée qui va suivre pour la compréhension de laquelle on se reportera aux dessins annexés parmi lesquels :

- la figure 1 est un schéma qui représente un dispositif de contrôle de vigilance pour véhicule conforme à l'invention ;
- les figures 2 à 6 sont des organigrammes qui montrent des étapes de procédés conformes à l'invention.

Dans la suite de la description, des éléments présentant une structure identique ou des fonctions analogues seront désignés par un même numéro de référence.

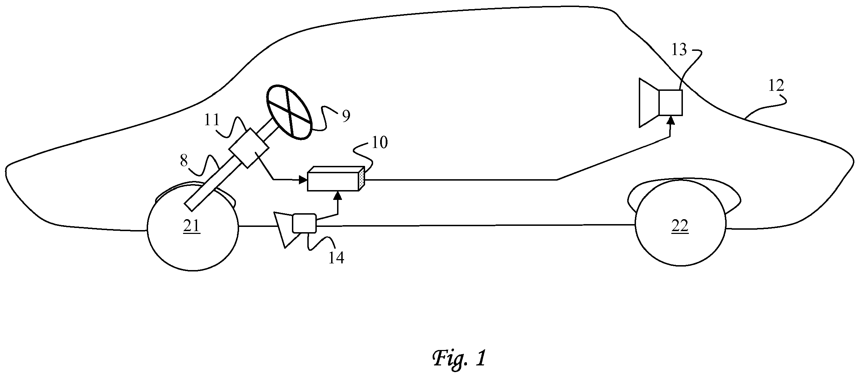

La figure 1 montre un véhicule 12 équipé de manière conventionnelle de roues avant 21, de roues arrière 22 et d'un volant 9 de direction pour braquer les roues avant 21 par l'intermédiaire d'une colonne de direction 8. Le dispositif de l'invention comporte un capteur 11 monté de préférence mais non nécessairement sur la colonne de direction 8 pour indiquer à un ordinateur embarqué 10 un angle de braquage $\alpha$ commandé à partir du volant 9. L'ordinateur embarqué 10 est connecté par ailleurs directement ou indirectement à des moyens d'alarme comme par exemple un haut-parleur 13 capable d'émettre un son propice à un réveil du conducteur du véhicule en cas de distraction de ce dernier détectée par l'ordinateur embarqué 10. Pour détecter une distraction du conducteur, l'ordinateur embarqué 10 est agencé pour pouvoir exécuter un programme d'ordinateur comprenant des instructions de code de programme pour l'exécution des étapes de procédé expliquées à présent.

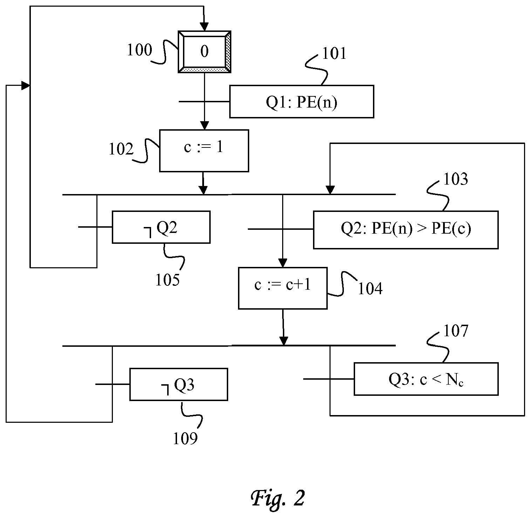

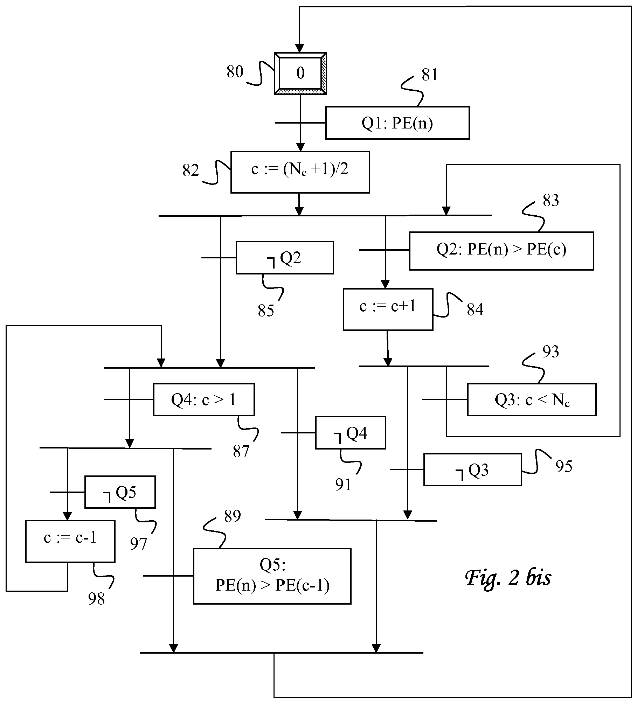

La figure 2 montre des étapes de procédé pour déterminer une classe de répartition statistique à laquelle appartient une erreur PE(n) sur une prédiction de paramètre représentatif du contrôle du véhicule par le conducteur, générée en temps réel par d'autres étapes du procédé. Le paramètre représentatif est par exemple un angle de rotation du volant de direction du véhicule mesuré par le capteur 11 ou un écart de trajectoire mesuré au moyen d'une caméra 14 orientée vers la chaussée et associée à un appareil de reconnaissance d'image, connus par ailleurs dans les systèmes de suivi de trajectoire.

Les autres étapes du procédé pour générer en temps réel l'erreur PE(n), ne sont pas décrites en détail car de nombreux modes de mise en œuvre peuvent être envisagés sans sortir du cadre de l'invention.

Dans une variante où on reprendrait les étapes décrites dans le document EP2160313, on rappelle simplement que l'erreur PE(n) de prédiction y est calculée à un instant n courant en faisant une différence entre une valeur d'angle prédite et la valeur $\alpha$ d'angle volant mesurée au moyen du capteur 11 à l'instant n, et transmise au calculateur 10 sur un réseau CAN par exemple toutes les 50 ms. La valeur d'angle prédite est obtenue par exemple dans le calculateur 10 au moyen d'un filtre récursif recevant en entrée les valeurs précédemment mesurées de l'angle volant. Le filtre récursif, réalisé au moyen d'un développement limité de Taylor à l'ordre 2, correspond à un filtre passe haut dont la fréquence de coupure est située par exemple mais non nécessairement aux alentours de 0,6 Hz.

Dans une variante où on utiliserait un suivi de trajectoire comme par exemple mais non nécessairement dans le document WO2014/006327 ou basé sur le document EP1235052, la valeur d'angle prédite pourrait être directement déduite de la valeur d'angle volant qui est nécessaire pour assurer le maintien du véhicule dans la voie. L'ordinateur embarqué calculerait alors l'erreur PE(n) entre la valeur déterminée par le suivi de trajectoire et la valeur d'angle volant effectivement appliquée par le conducteur du véhicule.

L'ensemble des classes de répartition comprend généralement un nombre $N_c$ impair de classes indicées de 1 à $N_c$, de sorte qu'il existe par exemple un nombre identique de classes de part et d'autre d'une classe moyenne ou médiane indicée $(N_c+1)/2$.

A partir d'une étape 100 de veille, chaque réception d'erreur PE(n) valide une transition 101 qui active une étape 102 dans laquelle un indice c de classe, est initialisé à 1.

La classe d'indice c=1, regroupe les erreurs PE(n) inférieures à un seuil haut d'erreur PE(1), ici négatif, par exemple égal à -5$\alpha$ de sorte que la première classe regroupe les erreurs comprises entre $-\infty$ et -5$\alpha$.

Tant que l'erreur PE(n) vérifie une condition Q2 qui est celle d'être supérieure au seuil haut d'erreur PE(c) relatif à la classe d'indice c courant, une transition 103 ainsi validée active une étape 104 pour passer à la classe d'indice suivant c+1. Dès que la condition Q2 n'est pas vérifiée, une transition 105 réactive l'étape de veille 100 avec pour effet de conserver en mémoire la dernière valeur de c positionnée dans l'étape 102 ou dans l'étape 104, signifiant que l'erreur PE(n) est comprise entre le seuil haut PE(c-1) de la classe précédente et le seuil haut PE(c) de la classe courante.

La dernière classe d'indice $N_c$ a son seuil haut d'erreur positionné à $+\infty$. Pour éviter d'avoir à vérifier la condition Q2 relative à ce seuil haut non borné, on peut prévoir une transition 107 validée à la suite de l'étape 104 par une condition Q3 qui est celle d'une classe courante d'indice c précédant la dernière classe d'indice $N_c$.

La condition Q3 non vérifiée, valide alors une transition 109 qui réactive l'étape 100 de veille avec pour effet de conserver en mémoire la dernière valeur de c positionnée dans l'étape 104 à la valeur $N_c$.

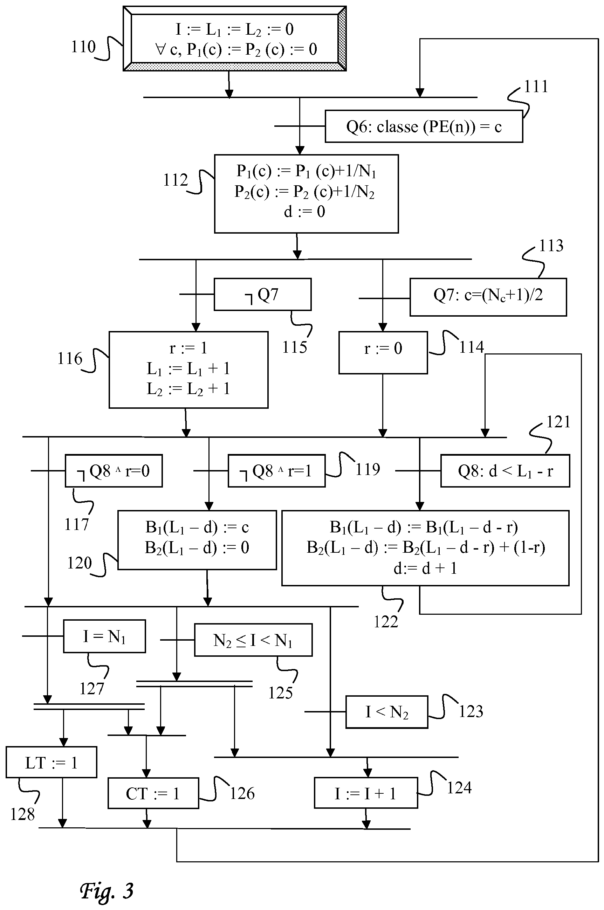

Chaque classe c détectée à la suite de la transition 101, vérifie une condition Q4 qui valide une transition 111 pour activer les étapes expliquées ci-après en référence à la figure 3.

La figure 2 bis montre d'autres étapes de procédé pour déterminer la classe de répartition statistique à laquelle appartient l'erreur PE(n) sur la prédiction d'angle de rotation du volant de direction du véhicule.

A partir d'une étape 80 de veille, chaque réception d'erreur PE(n) valide une transition 81 qui active une étape 82 dans laquelle l'indice c de classe, est initialisé à $(N_c +1)/2$ pour pointer sur la classe moyenne.

La classe d'indice $c=(N_c +1)/2$, regroupe les erreurs PE(n) dans une plage centrée sur la valeur nulle et comprise entre un seuil haut d'erreur $PE((N_c +1)/2)$, ici positif, par exemple égal à $\alpha$ et un seuil bas égal à l'opposé du seuil haut de sorte que la classe moyenne regroupe les erreurs comprises entre -a et +a.

Tant que l'erreur PE(n) vérifie une condition Q2 qui est celle d'être supérieure au seuil haut d'erreur PE(c) relatif à la classe d'indice c courant, une transition 83 ainsi validée active une étape 84 pour passer à la classe d'indice suivant c+1.

Lorsque la condition Q2 n'est pas vérifiée, une transition 85 réactive l'étape de veille 80 avec pour effet de conserver en mémoire la dernière valeur de c positionnée dans l'étape 82 ou dans une étape 98. Lorsque l'erreur PE(n) vérifie une condition Q5 qui est celle d'être supérieure au seuil haut d'erreur PE(c-1) relatif à la classe d'indice c précédant la classe moyenne, une transition 89 ainsi validée à la suite de la transition 85, réactive l'étape de veille 80 signifiant que l'erreur PE(n) est comprise entre le seuil haut PE(c-1) de la classe précédant la classe moyenne et le seuil haut PE(c) de la classe moyenne c positionnée dans l'étape 82. Tant que la classe c vérifie une condition Q4 qui est celle d'être strictement supérieure à l'unité, une transition 87, réactive l'étape 98 pour passer à la classe d'indice précédent c-1 jusqu'à ce que la transition 89 soit validée par une erreur PE(n) comprise entre le seuil haut PE(c-1) de la classe précédant la classe d'indice c courant et le seuil haut PE(c) de cette classe c positionnée dans l'étape 98, ou jusqu'à ce qu'une transition 91 soit validée par l'indice de classe égal à l'unité signifiant que l'erreur PE(n) est inférieures au seuil haut d'erreur PE(1), ici négatif, par exemple égal à $-5\alpha$ de sorte que la première classe regroupe les erreurs comprises entre $-\infty$ et $-5\alpha$.

La dernière classe d'indice $N_c$ a son seuil haut d'erreur positionné à $+\infty$. Pour éviter d'avoir à vérifier la condition Q2 relative à ce seuil haut non borné, on peut prévoir une transition 93 validée à la suite de l'étape 84 par une condition Q3 qui est celle d'une classe courante d'indice c précédant la dernière classe d'indice $N_c$.

La condition Q3 non vérifiée, valide alors une transition 95 qui réactive l'étape 80 de veille avec pour effet de conserver en mémoire la dernière valeur de c positionnée dans l'étape 84 à la valeur $N_c$.

Chaque classe c détectée à la suite de la transition 81, vérifie la condition Q4 qui valide la transition 111 pour activer les étapes à présent expliquées en référence à la figure 3.

Le but des étapes décrites en référence à la figure 3, est de calculer en temps réel une ou plusieurs distributions de densités de probabilités par classes, notamment une première distribution de densités de probabilités $P_1(c)$ sur un échantillon de $N_1$ erreurs PE(n) reçues précédemment à l'instant courant et une deuxième distribution de densités de probabilités $P_2(c)$ sur un échantillon de $N_2$ erreurs PE(n) reçues précédemment à l'instant courant. Particulièrement, une grande valeur attribuée à $N_1$ donne une distribution à long terme et une petite valeur attribuée à $N_2$ donne une distribution à court terme.

En appliquant l'hypothèse ergodique selon laquelle l'évolution d'apparition des classes au cours du temps apporte la même information qu'un ensemble de réalisations sur un ensemble de $N_1$ ou $N_2$ échantillons, on peut utiliser un registre à décalage de cellules, en tête duquel est introduit l'indice c de la classe apparue le plus récemment et en queue duquel est expulsé l'indice c de la classe apparue le plus anciennement. La quantité d'échantillons est ainsi constante, la probabilité de la classe introduite étant augmentée et la probabilité de la classe expulsée étant diminuée.

Lorsqu'une nouvelle classe c parmi $N_1$ classes possibles, valide la transition 111, sa densité de probabilité $P_1(c)$ dans la première répartition est augmentée de $1/N_1$ dans une étape 112 activée par la transition 111. De même pour toute autre distribution sur $N_2$ échantillons, la densité probabilité $P_2(c)$ dans l'autre répartition est augmentée de $1/N_2$ dans l'étape 112.

Les probabilités $P_1(c)$, $P_2(c)$ sont initialisées à zéro dans une étape initiale 110 pour toutes les classes répertoriées.

Pour évaluer la distribution sur un nombre $N_1$ d'échantillons constant, de manière à conserver la somme intégrale des densités de probabilité égale à 1, la densité de probabilité $P_1(k)$ de la classe d'indice k apparue le plus anciennement dans la première répartition est diminuée de $1/N_1$ dans une ou plusieurs étapes 144, 146 expliquées plus loin dans la description.

De même, pour évaluer la distribution sur tout autre nombre $N_2$ d'échantillons constant, la densité de probabilité $P_2(k)$ de la classe d'indice k apparue le plus anciennement dans l'autre répartition est diminuée de $1/N_2$ dans une ou plusieurs étapes 133, 135 expliquées plus loin dans la description.

La loi statistique des grands nombres impose un grand nombre $N_1$, $N_2$ d'échantillons pour obtenir une distribution représentative. Sans certaines des étapes de procédé décrites ci-dessous, cette contrainte nécessiterait un ou plusieurs registres à décalage de grande taille qui occuperait beaucoup de place en mémoire physique du calculateur embarqué au détriment d'autres applications.

Pour réduire la taille de mémoire physique, aussi nommée mémoire réelle, le procédé conforme à l'invention permet de traiter chaque registre mentionné ci-dessus sous forme d'un registre virtuel associé à au moins un registre réel $B_{1,1}$, $B_{1,2}$ à longueur variable $L_1$, $L_2$.

Une transition 113 est validée par une condition Q7 selon laquelle l'indice de classe c désigne une classe à plus forte fréquence d'apparition, en d'autres termes la classe moyenne qui, telle que définie ci-dessus pour la mesure d'erreur d'angle PE(n), a été constatée au cours d'essais, assimilable à la classe médiane d'indice $c=(N_c+1)/2$

La validation de la transition 113 a pour effet de ne pas introduire l'indice de classe c en tête du registre réel $B_{1,1}$, $B_{1,2}$ réduisant d'autant à chaque apparition de la classe moyenne, la longueur variable $L_1$, $L_2$ du registre réel $B_{1,1}$, $B_{1,2}$ par rapport à une longueur $N_1$ ou $N_2$ fixée de registre virtuel qui contiendrait tous les indices de classe apparus. Comme l'apparition de classe qui valide la transition 113 est celle à plus forte fréquence, la diminution de taille mémoire réelle consommée est considérable.

La condition Q7 n'est pas vérifiée lorsque l'indice de classe c désigne une autre classe que celle à plus forte fréquence d'apparition. Ainsi toute autre classe, dont par ailleurs divers essais ont permis de constater un faible taux d'apparition, valide une transition 115 qui active une étape 116 dans laquelle la longueur $L_1$ du registre réel $B_{1,1}$ associé au registre virtuel de plus grande longueur $N_1$ en relation avec la distribution à long terme, est augmentée d'une unité pour permettre d'introduire le nouvel indice de classe c dans une case de mémoire réelle en tête du registre réel $B_{1,1}$.

Le registre virtuel de plus petite longueur $N_2$ en relation avec la distribution à court terme, est inclus dans le registre virtuel de plus grande longueur $N_1$ en relation avec la distribution à long terme. Il en est de même du registre réel $B_{1,2}$ qui en conséquence est inclus dans le registre réel $B_{1,1}$ avec une longueur variable $L_2$ au plus égale à la longueur variable $L_1$. La longueur $L_2$ du registre réel $B_{1,2}$ est aussi augmentée d'une unité en étape 116.

Les longueurs $L_1$, $L_2$ sont initialisées à zéro dans l'étape initiale 110.

Le registre réel $B_{1,2}$ étant inclus dans le registre réel $B_{1,1}$, il suffit d'un seul registre réel $B_1$ de longueur $L_1$ égale à la plus longue des longueurs ci-dessus mentionnées. La longueur $L_2$ prise à partir de la tête du registre $B_1$ permet de pointer sur la queue du registre réel associé au registre virtuel de plus petite longueur $N_2$. C'est ce registre réel $B_1$ que nous considérons dans la suite de la description.

Une première phase de parcours des étapes représentées sur la figure 3, consiste à atteindre une longueur $L_1$ du registre réel $B_1$ qui correspond à une atteinte de la longueur $N_1$ du registre virtuel pour obtenir une distribution à long terme représentative sur $N_1$ échantillons.

Le procédé évoluera ensuite en deuxième phase sur un registre réel $B_1$ associé en permanence au registre virtuel de longueur $N_1$ constante.

La première phase est réalisable de différentes manières, par exemple en mettant en œuvre un cycle spécifique d'étapes pour la première phase et un autre cycle spécifique d'étapes pour la deuxième phase.

Dans la réalisation illustrée par la figure 3, la première phase est gérée par un indicateur I de remplissage du registre virtuel de plus grande taille. Avant toute prise en compte d'une classe d'erreur PE(n), l'indicateur I est initialisé à zéro dans l'étape 110. Tant que I est inférieur à $N_1$, une étape 124 est activée ultérieurement à chaque validation de la transition 113 ou de la transition 115, avant de reboucler en amont de la transition 111 de façon à prendre en compte une nouvelle classe d'erreur PE(n).

Si pour les raisons que nous verrons ci-après, on souhaite distinguer le cas où I est inférieur à N1 en étant supérieur ou égal à N2, validant une transition 125, et le cas où I est inférieur à N1 parce qu'il est inférieur à N2, validant une transition 123, l'étape 124 est activée par la validation de l'une ou l'autre des étapes 123 ou 125.

Pour faciliter l'exécution du procédé selon que c'est la transition 113 ou la transition 115 qui est validée, on peut mettre à 1 un indicateur r d'utilisation de registre réel dans l'étape 116. En absence d'utilisation du registre réel, l'indicateur r est alors mis à zéro dans une étape 114 activée par validation de la transition 113.

Chaque apparition d'un nouvel indice de classe c, décale chaque registre virtuel d'une case vers sa queue. Comme un registre virtuel n'a pas d'existence physique, il est nécessaire de gérer ce décalage dans le registre réel qui lui seul a une existence physique en mémoire réelle. C'est l'objet de l'étape 122 activée par validation d'une transition 121.

La transition 121 est validée tant qu'un index d de décalage est inférieur à la valeur de longueur $L_1$ du registre réel $B_1$ avant validation de la transition 111. En d'autres termes, lorsque l'indicateur r est nul, la transition 121 est validée par une condition Q8 qui est celle selon laquelle l'index d est inférieur à $L_1$. Lorsque l'indicateur r est non nul, la transition 121 est validée par la condition Q8 qui est alors celle selon laquelle l'index d est inférieur à $L_1-1$.

L'index d est initialisé à zéro dans l'étape 112 puis augmenté d'une unité à chaque activation de l'étape 122.

Lorsque l'indicateur r est non nul, chaque cellule $B_1(L_1-d)$ du registre $B_1$ prend le contenu de la cellule précédente $B_1(L_1-d-1)$ à chaque itération de l'étape 122, en partant de la dernière cellule $B_1(L_1)$ lors de la première itération de l'étape 122.

Lorsque l'indicateur r est nul, chaque cellule $B_1(L_1-d)$ du registre $B_1$ garde son contenu inchangé à chaque itération de l'étape 122.

Pour tenir compte du décalage effectif des cellules dans le registre virtuel associé lorsque l'indice de classe $c=(N_c+1)/2$ n'est pas introduit en tête du premier registre réel $B_1$, un deuxième registre réel $B_2$ de longueur identique à celle du premier registre réel $B_1$, associe à chaque cellule du premier registre réel $B_1$ un indicateur de datation.

Ainsi, lorsque l'indicateur r est nul, le contenu de chaque cellule $B_2(L_1-d)$ du registre $B_2$ est augmenté d'une unité.

Lorsque l'indicateur r est non nul, chaque cellule $B_2(L_1-d)$ du registre $B_2$ prend simplement le contenu de

la cellule précédente $B_2(L_1\text{-}d\text{-}1)$ à chaque itération de l'étape 122, en partant de la dernière cellule $B_1(L_1)$ lors de la première itération de l'étape 122.

Lorsque l'indicateur r est non nul et que l'index d atteint la valeur $L_1\text{-}1$, une transition 119 est validée qui active une étape 120.

L'étape 120 consiste à introduire l'indice de classe c qui a validé la transition 111 dans la cellule $B_1(L_1\text{-}d)$ qui est la cellule $B_1(1)$ en tête du premier registre réel $B_1$ et une valeur nulle dans la cellule $B_2(L_1\text{-}d)$ qui est la cellule $B_2(1)$ en tête du deuxième registre réel $B_2$.

Lorsque l'indicateur r est nul et que l'index d atteint la valeur $L_1$, une transition 117 est validée qui positionne le procédé directement en aval de l'étape 120.

En aval de l'étape 120, les transitions 123 et 125 activent l'étape 124 comme nous l'avons vu ci-dessus.

La transition 125 validée lorsque l'indicateur I de remplissage du registre virtuel est compris entre $N_2$ et $N_1$, active en outre une étape 126 dans laquelle un drapeau CT d'atteinte à court terme de queue du registre virtuel, est levé. L'étape 126 comme l'étape 124 reboucle en amont de la transition 111 pour prise en compte de la classe en apparition suivante.

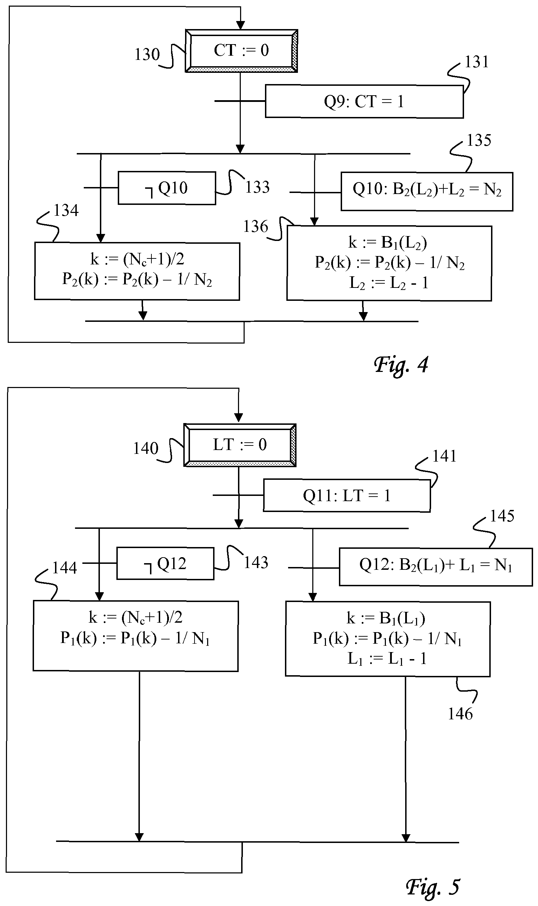

Le drapeau CT d'atteinte à court terme sert à synchroniser le cycle d'étapes décrites à présent en référence à la figure 4.

Le cycle de la figure 4 est par défaut dans une étape initiale 130 dans laquelle le drapeau CT d'atteinte à court terme de queue du registre virtuel, est baissé à zéro. La levée du drapeau CT d'atteinte à court terme de queue du registre virtuel en étape 126, satisfait une condition Q9 qui provoque une validation de transition 131.

Une condition Q10 est satisfaite lorsque la cellule $B_2(L_2)$ de rang $L_2$ dans le deuxième registre réel $B_2$, contient un indicateur de datation qui, ajouté à la longueur $L_2$, donne la longueur $N_2$ du registre virtuel à court terme. L'indicateur de datation donne la quantité d'apparitions de la classe moyenne qui doivent être prises en compte dans le registre virtuel à court terme malgré qu'elles n'aient pas été introduites dans le premier registre réel. La longueur $L_2$ donne la quantité d'apparitions des autres classes qui doivent aussi être prises en compte dans le registre virtuel à court terme mais qui ont été introduites dans le premier registre réel. La somme des deux quantités donne un rang dans le registre virtuel de la cellule $B_2(L_2)$ en queue à court terme du deuxième registre réel $B_2$ et par conséquent de la cellule $B_1(L_2)$ en queue à court terme du premier registre réel $B_1$ à laquelle elle est associée.

Une transition 135 est validée lorsque la condition Q10 est satisfaite.

Une validation des transitions 131 et 135, active une étape 136 dans laquelle on relève l'indice de classe k donné par la cellule $B_1(L_2)$ en queue à court terme du premier registre réel $B_1$. L'indice de classe k est l'indice de classe c qui avait validé la transition 111 avant d'avoir observé $N_2$ apparitions de classes suivantes. Cette classe disparaissant du registre virtuel à court terme, sa probabilité $P_2(k)$ est diminuée de $1/N_2$. Bien que l'indice de classe k reste dans le registre réel $B_1$ pour sa prise en compte à long terme, il sort de la partie de registre réel associée au registre virtuel à court terme. La longueur $L_2$ est diminuée d'une unité.

Une transition 133 est validée lorsque la condition Q10 n'est pas satisfaite. Dans ce cas l'indice de classe k en dernière cellule du registre virtuel à court terme, n'est pas contenu dans le registre réel $B_1$.

Une validation de la transition 133 active une étape 134 dans laquelle l'indice de classe k est positionné à la valeur de celui de la classe moyenne $(N_c+1)/2$. Cette classe disparaissant du registre virtuel à court terme, sa probabilité $P_2(k)$ est diminuée de $1/N_2$.

En fin d'exécution de l'étape 134 ou de l'étape 136, le procédé retourne en étape 130 en attente d'une nouvelle synchronisation donnée par l'étape 126.

En figure 3, la transition 127 validée lorsque l'indicateur I de remplissage du registre virtuel est égal à $N_1$, active l'étape 126 dans laquelle le drapeau CT d'atteinte à court terme de queue du registre virtuel, est levé et active en outre une étape 128 dans laquelle un drapeau LT d'atteinte à long terme de queue du registre virtuel, est levé. L'étape 128 comme l'étape 126 reboucle en amont de la transition 111 pour prise en compte de la classe en apparition suivante.

Le drapeau LT d'atteinte à long terme sert à synchroniser le cycle d'étapes décrites à présent en référence à la figure 5.

Le cycle de la figure 5 est par défaut dans une étape initiale 140 dans laquelle le drapeau LT d'atteinte à long terme de queue du registre virtuel, est baissé. La levée à 1 du drapeau LT d'atteinte à long terme de queue du registre virtuel en étape 128, satisfait une condition Q11 qui provoque une validation de transition 141.

Une condition Q12 est satisfaite lorsque la dernière cellule $B_2(L_1)$ en queue du deuxième registre réel $B_2$, contient un indicateur de datation qui, ajouté à la longueur $L_1$, donne la longueur $N_1$ du registre virtuel à long terme. L'indicateur de datation donne la quantité d'apparitions de la classe moyenne qui doivent être prises en compte dans le registre virtuel à long terme malgré qu'elles n'aient pas été introduites dans le premier registre réel. La longueur $L_1$ donne la quantité d'apparitions des autres classes qui doivent aussi être prises en compte dans le registre virtuel à long terme mais qui ont été introduites dans le premier registre réel. La somme des deux quantités donne un rang dans le registre virtuel de la dernière cellule $B_2(L_1)$ en queue du deuxième registre réel $B_2$ et par conséquent de la dernière cellule $B_1(L_1)$ en queue du premier registre réel $B_1$ à laquelle elle est associée.

Une transition 145 est validée lorsque la condition Q12 est satisfaite.

Une validation des transitions 141 et 145, active une étape 146 dans laquelle on relève l'indice de classe k donné par la cellule $B_1(L_1)$ en queue du premier registre

réel $B_1$. L'indice de classe k est l'indice de classe c qui avait validé la transition 111 avant d'avoir observé $N_1$ apparitions de classes suivantes. Cette classe disparaissant du registre virtuel à long terme, sa probabilité $P_1(k)$ est diminuée de $1/N_1$. L'indice de classe k sortant du registre réel associé au registre virtuel à long terme, la longueur $L_1$ est diminuée d'une unité.

Une transition 143 est validée lorsque la condition Q12 n'est pas satisfaite. Dans ce cas l'indice de classe k en dernière cellule du registre virtuel à court terme, n'est pas contenu dans le registre réel $B_1$.

Une validation de la transition 143 active une étape 144 dans laquelle l'indice de classe k est positionné à la valeur de celui de la classe moyenne $(N_c+1)/2$. Cette classe disparaissant du registre virtuel à long terme, sa probabilité $P_1(k)$ est diminuée de $1/N_1$.

En fin d'exécution de l'étape 144 ou de l'étape 146, le procédé retourne en étape 140 en attente d'une nouvelle synchronisation donnée par l'étape 128.

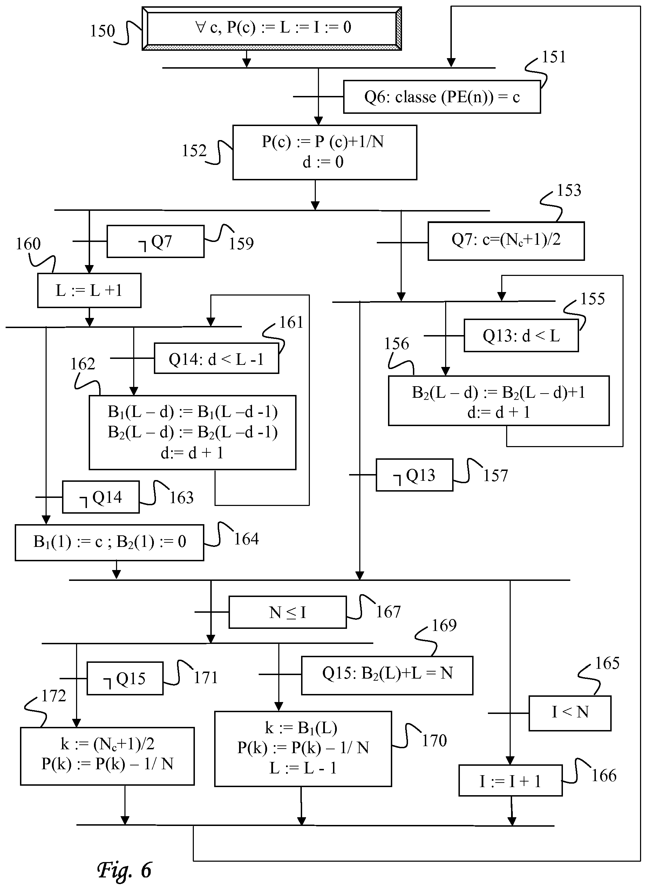

Dans les cas où une seule distribution est suffisante comme nous le verrons par la suite, des étapes décrites en référence à la figure 6, ont pour but de calculer en temps réel une distribution de densités de probabilités par classes, notamment une distribution de densités de probabilités P(c) sur un échantillon de N erreurs PE(n) reçues précédemment à l'instant courant. Le procédé est alors simplifié.

Ici encore l'hypothèse ergodique selon laquelle l'évolution d'apparition des classes au cours du temps apporte la même information qu'un ensemble de réalisations sur un ensemble de N échantillons, permet d'utiliser un registre à décalage de cellules, en tête duquel est introduit l'indice c de la classe apparue le plus récemment et en queue duquel est expulsé l'indice k qui correspond comme précédemment à l'indice c de la classe apparue le plus anciennement. La quantité d'échantillons est ainsi constante, la probabilité de la classe introduite étant augmentée et la probabilité de la classe expulsée étant diminuée.

Lorsqu'une nouvelle classe c parmi N classes possibles, valide la transition 151, sa densité de probabilité P(c) dans la distribution est augmentée de 1/N dans une étape 152 activée par la transition 151.

La probabilité P(c) est initialisée à zéro dans une étape initiale 150 pour toutes les classes répertoriées.

Pour évaluer la distribution sur un nombre N d'échantillons constant ici aussi, de manière à conserver la somme intégrale des densités de probabilité égale à 1, la densité de probabilité P(k) de la classe d'indice k apparue le plus anciennement dans la répartition est diminuée de $1/N_1$ dans une ou plusieurs étapes 144, 146 expliquées plus loin dans la description.

Une transition 153 est validée par la condition Q7 selon laquelle l'indice de classe c désigne la classe à plus forte fréquence d'apparition, constatée au cours d'essais, assimilable à la classe médiane d'indice $c=(N_c+1)/2$

La validation de la transition 153 a pour effet de ne pas introduire l'indice de classe c en tête du registre réel $B_1$ réduisant d'autant à chaque apparition de la classe moyenne, la longueur variable L du registre réel $B_1$ par rapport à une longueur N fixée de registre virtuel qui contiendrait tous les indices de classe apparus. Comme l'apparition de classe qui valide la transition 153 est celle à plus forte fréquence, la diminution de taille mémoire réelle consommée est considérable.

La condition Q7 n'est pas vérifiée lorsque l'indice de classe c désigne une autre classe que celle à plus forte fréquence d'apparition. Ainsi toute autre classe, dont par ailleurs divers essais ont permis de constater un faible taux d'apparition, valide une transition 159 qui active une étape 160 dans laquelle la longueur L du registre réel $B_1$ associé au registre virtuel de longueur N, est augmentée d'une unité pour permettre d'introduire le nouvel indice de classe c dans une case de mémoire réelle en tête du registre réel $B_1$.

La longueur L est initialisée à zéro dans l'étape initiale 150.

Comme pour l'exemple de réalisation de la figure 3, une première phase de parcours des étapes représentées sur la figure 6, consiste à atteindre une longueur L du registre réel $B_1$ qui correspond à une atteinte de la longueur N du registre virtuel pour obtenir la distribution représentative sur N échantillons.

Le procédé évoluera ensuite en deuxième phase sur un registre réel $B_1$ associé en permanence au registre virtuel de longueur N constante.

Ici encore, la première phase est réalisable de différentes manières, par exemple en mettant en œuvre un cycle spécifique d'étapes pour la première phase et un autre cycle spécifique d'étapes pour la deuxième phase.

Dans la réalisation illustrée par la figure 6, la première phase est gérée par l'indicateur I de remplissage du registre virtuel. Avant toute prise en compte d'une classe d'erreur PE(n), l'indicateur I est initialisé à zéro dans l'étape 150. Tant que I est inférieur à N, une étape 166 est activée ultérieurement à chaque validation de la transition 153 ou de la transition 159, avant de reboucler en amont de la transition 151 de façon à prendre en compte une nouvelle classe d'erreur PE(n).

Lorsque la transition 153 est validée, une transition 155 est validée tant qu'un index d de décalage est inférieur à la valeur de longueur L du registre réel $B_1$ avant validation de la transition 151. En d'autres termes, la transition 155 est validée par une condition Q13 qui est celle selon laquelle l'index d est inférieur à L. Lorsque la transition 159 est validée, une transition 161 est validée tant que l'index d de décalage est inférieur à la valeur de longueur L -1 du registre réel $B_1$ qui correspond à une condition Q14.

L'index d est initialisé à zéro dans l'étape 152 puis augmenté d'une unité à chaque activation d'une étape 156 à la suite de la transition 155 ou d'une étape 162 à la suite de la transition 161.

Chaque cellule $B_1(L-d)$ du registre $B_1$, respectivement chaque cellule $B_2(L-d)$ du registre $B_2$, prend le contenu de la cellule précédente $B_1(L-d-1)$, respectivement de la cellule précédente $B_2(L-d-1)$ à chaque itération de l'étape 162, en partant de la dernière cellule $B_1(L)$, respectivement $B_2(L)$ lors de la première itération de l'étape 162.

Chaque cellule $B_1(L-d)$ du registre $B_1$ garde son contenu inchangé à chaque itération de l'étape 156.

Pour tenir compte du décalage effectif des cellules dans le registre virtuel associé lorsque l'indice de classe $c=(N_c+1)/2$ n'est pas introduit en tête du premier registre réel $B_1$, le deuxième registre réel $B_2$ de longueur identique à celle du premier registre réel $B_1$, associe à chaque cellule du premier registre réel $B_1$ un indicateur de datation de sorte que le contenu de chaque cellule $B_2(L-d)$ du registre $B_2$ est augmenté d'une unité à chaque itération de l'étape 156.

Lorsque la condition Q14 est non vérifiée, en d'autres termes lorsque l'index d atteint la valeur L-1, une transition 163 est validée qui active une étape 164.

L'étape 164 consiste à introduire l'indice de classe c qui a validé la transition 151 dans la cellule $B_1(L-d)$ qui est la cellule $B_1(1)$ en tête du premier registre réel $B_1$ et une valeur nulle dans la cellule $B_2(L_1-d)$ qui est la cellule $B_2(1)$ en tête du deuxième registre réel $B_2$.

Lorsque la condition Q13 est non vérifiée, en d'autres termes lorsque l'index d atteint la valeur L, une transition 157 est validée qui positionne le procédé directement en aval de l'étape 164.

En aval de l'étape 164, la transition 165 active l'étape 166 comme nous l'avons vu ci-dessus.

La transition 167 validée lorsque l'indicateur I de remplissage du registre virtuel est égal à N, voire supérieur à N, active l'une ou l'autre de deux étapes 170, 172 comme expliqué à présent.

Une condition Q15 est satisfaite lorsque la cellule $B_2(L)$ de rang L dans le deuxième registre réel $B_2$, contient un indicateur de datation qui, ajouté à la longueur L, donne la longueur N du registre virtuel $B_2$. L'indicateur de datation donne la quantité d'apparitions de la classe moyenne qui doivent être prises en compte dans le registre virtuel à court terme malgré qu'elles n'aient pas été introduites dans le premier registre réel. La longueur L donne la quantité d'apparitions des autres classes qui doivent aussi être prises en compte dans le registre virtuel mais qui ont été introduites dans le premier registre réel. La somme des deux quantités donne un rang dans le registre virtuel de la cellule $B_2(L)$ en queue du deuxième registre réel $B_2$ et par conséquent de la cellule $B_1(L_2)$ en queue du premier registre réel $B_1$ à laquelle elle est associée.

Une transition 169 est validée lorsque la condition Q15 est satisfaite.

Une validation des transitions 167 et 169, active une étape 170 dans laquelle on relève l'indice de classe k donné par la cellule $B_1(L)$ en queue du premier registre réel $B_1$. L'indice de classe k est l'indice de classe c qui avait validé la transition 151 avant d'avoir observé N apparitions de classes suivantes. Cette classe disparaissant du registre virtuel, sa probabilité $P(k)$ est diminuée de 1/N. La longueur L est diminuée d'une unité.

Une transition 171 est validée lorsque la condition Q15 n'est pas satisfaite. Dans ce cas l'indice de classe k en dernière cellule du registre virtuel à court terme, n'est pas contenu dans le registre réel $B_1$.

Une validation de la transition 171 active une étape 172 dans laquelle l'indice de classe k est positionné à la valeur de celui de la classe moyenne $(N_c+1)/2$. Cette classe disparaissant du registre virtuel à court terme, sa probabilité $P(k)$ est diminuée de 1/N.

En fin d'exécution de l'étape 170 ou de l'étape 172, le procédé retourne en aval de la transition 151 en attente d'une nouvelle classe c d'erreur.

La distribution statistique $\{P(c_i)\}_{i=1}^{Nc}$ obtenue par les étapes de procédé de la figure 6, permet de calculer en temps réel une valeur d'entropie H, représentative d'un niveau de dispersion des erreurs de prédiction d'autant plus élevé que la valeur d'entropie est haute. On rappelle que, de manière connue, la valeur d'entropie H d'une distribution statistique est calculée au moyen de la formule de thermodynamique statistique suivante :

$$H := -\sum_{i=1}^{i=Nc} P(c_i)\log_{Nc}\left[P(c_i)\right]$$

Le degré de perturbation ainsi mesuré par l'entropie H, permet de détecter la distraction du conducteur. Une entropie proche de zéro reflète une forte concentration du conducteur. La distraction du conducteur peut alors être détecté lorsque la valeur d'entropie H dépasse un seuil S qui se base par exemple sur des études comportementales préalables, sur des expériences ou d'autres manières.

L'avantage d'un seuil Sf fixé de manière prédéterminée est dans la facilité de mise en œuvre qui par conséquent permet des économies en termes de ressources de traitement de données.

Cependant, un seuil Sf fixe sur l'entropie n'est pas nécessairement adapté à un large échantillon de conducteurs (pilotes ou conducteurs novices), de profils routiers (chemins chaotiques ou tortueux) ou autres.

Les distributions statistiques multiples obtenues par les étapes de procédé de la figure 3, permettent de calculer en temps réel une ou plusieurs valeurs d'entropie relative RH, représentative(s) de niveaux comparables de dispersions des erreurs de prédiction.

Notamment la distribution $\{P1(c_i)\}_{i=1}^{Nc}$ à long terme de longueur N1 est plus représentative d'une nature de conducteur attentif ou discret, d'un profil routier régulier ou tortueux que ne l'est un seuil fixé a priori.

La distribution $\{P2(c_i)\}_{i=1}^{Nc}$ à court terme de longueur N2 est alors représentative du comportement du conducteur.

On rappelle que, de manière connue, la valeur d'entropie relative RH de deux distributions statistiques est calculée au moyen de la formule de thermodynamique statistique suivante :

$$RH := -\sum_{i=1}^{i=Nc} P2(c_i) \log_{Nc}\left[P2(c_i)/P1(c_i)\right]$$

Le degré de perturbation ainsi mesuré par l'entropie RH, permet de détecter la distraction du conducteur de manière auto adaptative au conducteur, au profil routier ou à d'autres contextes, en la comparant à un seuil Sr prédéterminé.

**Revendications**

1. Procédé d'évaluation de la vigilance d'un conducteur de véhicule à partir d'au moins une distribution statistique sur une quantité (N, $N_1$, $N_2$) d'erreurs (PE(n)) de paramètre représentatif du contrôle du véhicule par le conducteur appartenant chacune à une classe (c) au sein d'un ensemble de classes comportant une classe moyenne (($N_c$+1)/2), **caractérisé en ce qu'**il comprend des étapes consistant à :

   - augmenter (112) une densité de probabilité (P(c), P1(c), P2(c)) associée à une classe (c) à laquelle appartient (111, 151) une erreur (PE(n)) de paramètre qui se présente (101) à un instant courant ;
   - diminuer (126, 134, 136, 128, 144, 146) ladite densité de probabilité associée à la classe (c) à un instant ultérieur après avoir observé (100) ladite quantité (N, $N_1$, $N_2$) d'erreurs (PE(n)) de paramètre.

2. Procédé selon la revendication 1, **caractérisé en ce qu'**il comprend des étapes consistant à :

   - lorsque ladite classe (c) n'est pas égale (115) à ladite classe moyenne (($N_c$+1)/2) ;
   - augmenter (116) au moins une première longueur (L, $L_1$) commune à un premier registre à décalage ($B_1$) de longueur variable et à un deuxième registre à décalage ($B_2$) de longueur variable lorsque se présente (101) ladite erreur (PE(n)) de paramètre appartenant à ladite classe (c) ;
   - entrer (120) en tête dudit premier registre ($B_1(1)$) un indice de ladite classe (c) et en tête dudit deuxième registre ($B_2(1)$) un indicateur initial de date.

3. Procédé selon la revendication 2, **caractérisé en ce qu'**il comprend une étape (122) consistant à :

   - décaler les cellules ($B_1(L_1$-d)), ($B_2(L_1$-d)) des registres à décalage ($B_1$, $B_2$) lorsque ladite classe (c) n'est pas égale (115) à ladite classe moyenne (($N_c$+1)/2) ;
   - augmenter d'une unité le contenu des cellules ($B_2(L_1$-d)) du deuxième registre à décalage ($B_2$) sans modifier le contenu des cellules ($B_1(L_1$-d)) du premier registre à décalage ($B_1$) lorsque ladite classe (c) est égale (113) à ladite classe moyenne (($N_c$+1)/2).

4. Procédé selon l'une des revendications 1 à 3, **caractérisé en ce que** ladite densité de probabilité (P1(c), P2(c)) associée à ladite classe (c) est :

   - augmentée en lui ajoutant une valeur inverse de ladite quantité ($N_1$, $N_2$) d'erreurs (PE(n)) de paramètre; et
   - diminuée à un instant ultérieur en lui retranchant ladite valeur inverse de la quantité ($N_1$, $N_2$) d'erreurs (PE(n)) de paramètre.

5. Procédé selon l'une des revendications précédentes, **caractérisé en ce que** lesdites erreurs de paramètre représentatif du contrôle du véhicule par le conducteur sont des erreurs de prédictions d'angles (PE(n)) d'un volant de direction.

6. Programme d'ordinateur comprenant des instructions de code de programme pour l'exécution des étapes du procédé selon l'une des revendications 1 à 5 lorsque ledit programme est exécuté sur un ordinateur.

7. Dispositif d'évaluation de la vigilance d'un conducteur de véhicule au moyen d'un capteur (11, 14) de paramètre représentatif du contrôle du véhicule par le conducteur, **caractérisé en ce qu'**il comprend un ordinateur embarqué (10) sur lequel est installé un programme selon la revendication 6.

8. Véhicule automobile **caractérisé en ce qu'**il comporte un dispositif selon la revendication 7.

**Patentansprüche**

1. Verfahren zur Beurteilung der Aufmerksamkeit eines Fahrers eines Fahrzeugs anhand mindestens einer statistischen Verteilung über einer Menge (N, $N_1$, $N_2$) von Fehlern (PE(n)) eines Parameters, der für die Steuerung des Fahrzeugs durch den Fahrer repräsentativ ist, die jeweils einer Klasse (c) innerhalb einer Menge von Klassen angehören, die eine mittlere Klasse (($N_c$+1)/2) aufweist, **dadurch gekennzeichnet, dass** es folgende Schritte umfasst:

   - Erhöhen (112) einer Wahrscheinlichkeitsdichte (P(c), P1(c), P2(c)), die einer Klasse (c) zugeordnet ist, welcher ein Parameterfehler (PE(n)) angehört (111, 151), der zu einem aktuellen Zeitpunkt auftritt (101);
- Verringern (126, 134, 136, 128, 144, 146) der Wahrscheinlichkeitsdichte, die der Klasse (c) angehört, zu einem späteren Zeitpunkt, nachdem die Menge (N, $N_1$, $N_2$) von Parameterfehlern (PE(n)) beobachtet (100) wurde.

2. Verfahren nach Anspruch 1, **dadurch gekennzeichnet, dass** es folgende Schritte umfasst:

- wenn die Klasse (c) nicht gleich (115) der mittleren Klasse (($N_c$+1)/2) ist;
- Erhöhen (116) mindestens einer ersten Länge (L, $L_1$), die einem ersten Schieberegister ($B_1$) variabler Länge und einem zweiten Schieberegister ($B_2$) variabler Länge gemein ist, wenn der Parameterfehler (PE(n)) auftritt (101), der der Klasse (c) angehört;
- Eintragen (120) eines Index der Klasse (c) in den Kopfteil des ersten Registers ($B_1$(1)) und eines Initial-Datumsindikators in den Kopfteil des zweiten Registers ($B_2$(1)).

3. Verfahren nach Anspruch 2, **dadurch gekennzeichnet, dass** es einen Schritt (122) umfasst, der in Folgendem besteht:

- Verschieben der Zellen ($B_1$($L_1$-d), ($B_2$($L_1$-d)) der Schieberegister ($B_1$, $B_2$), wenn die Klasse (c) nicht gleich (115) der mittleren Klasse (($N_c$+1)/2) ist;
- Erhöhen des Inhalts der Zellen ($B_2$($L_1$-d)) des zweiten Schieberegister ($B_2$) um eine Einheit, ohne den Inhalt der Zellen ($B_1$($L_1$-d)) des ersten Schieberegisters ($B_1$) zu ändern, wenn die Klasse (c) gleich (113) der mittleren Klasse (($N_c$+1)/2) ist.

4. Verfahren nach einem der Ansprüche 1 bis 3, **dadurch gekennzeichnet, dass** die Wahrscheinlichkeitsdichte (P1(c), P2(c)), die der Klasse (c) zugeordnet ist:

- erhöht wird, indem ihr ein Kehrwert der Menge ($N_1$, $N_2$) von Parameterfehlern (PE(n)) hinzuaddiert wird; und
- zu einem späteren Zeitpunkt verringert wird, indem ihr der Kehrwert der Menge ($N_1$, $N_2$) von Parameterfehlern (PE(n)) abgezogen wird.

5. Verfahren nach einem der vorhergehenden Ansprüche, **dadurch gekennzeichnet, dass** die Fehler des Parameters, der für die Steuerung des Fahrzeugs durch den Fahrer repräsentativ ist, Fehler bei Vorhersagen von Winkeln (PE(n)) eines Lenkrads sind.

6. Computerprogramm umfassend Programmcode-Anweisungen zur Ausführung der Schritte des Verfahrens nach einem der Ansprüche 1 bis 5, wenn das Programm auf einem Computer ausgeführt wird.

7. Vorrichtung zur Beurteilung der Aufmerksamkeit eines Fahrers eines Fahrzeugs mittels eines Sensors (11, 14) eines Parameters, der für die Steuerung des Fahrzeugs durch den Fahrer repräsentativ ist, **dadurch gekennzeichnet, dass** sie einen Bordcomputer (10) umfasst, auf dem ein Programm nach Anspruch 6 installiert ist.

8. Kraftfahrzeug, **dadurch gekennzeichnet, dass** es eine Vorrichtung nach Anspruch 7 aufweist.

**Claims**

1. Method for evaluating the alertness of a vehicle driver from at least one statistical distribution over a quantity (N, $N_1$, $N_2$) of errors (PE(n)) in a parameter representative of the control of the vehicle by the driver, each belonging to a class (c) within a set of classes comprising an average class (($N_c$+1)/2), **characterized in that** it comprises steps of:

- increasing (112) a probability density (P(c), P1(c), P2(c)) associated with a class (c) to which belongs (111, 151) a parameter error (PE(n)) which occurs (101) at a current time;
- decreasing (126, 134, 136, 128, 144, 146) said probability density associated with the class (c) at a later time after having observed (100) said quantity (N, $N_1$, $N_2$) of parameter errors (PE(n)).

2. Method according to Claim 1, **characterized in that** it comprises steps of:

- when said class (c) is not equal (115) to said average class (($N_c$+1)/2);
- increasing (116) at least a first length (L, $L_1$) common to a first shift register ($B_1$) of variable length and to a second shift register ($B_2$) of variable length when said parameter error (PE(n)) belonging to said class (c) occurs (101);
- entering (120) into the top of said first register ($B_1$(1)) an index of said class (c) and into the top of said second register ($B_2$(1)) an initial date indicator.

3. Method according to Claim 2, **characterized in that** it comprises a step (122) of:

- shifting the cells ($B_1$($L_1$-d), ($B_2$($L_1$-d)) of the shift registers ($B_1$, $B_2$) when said class (c) is not equal (115) to said average class (($N_c$+1)/2);
- increasing by one unit the content of the cells

$(B_2(L_1-d))$ of the second shift register $(B_2)$ without modifying the content of the cells $(B_1(L_1-d)$ of the first shift register $(B_1)$ when said class (c) is equal (113) to said average class $((N_c+1)/2)$.

4. Method according to one of Claims 1 to 3, **characterized in that** said probability density (P1(c), P2(c)) associated with said class (c) is:

  - increased by adding thereto an inverse value of said quantity $(N_1, N_2)$ of parameter errors (PE(n)); and
  - decreased at a later time by subtracting said inverse value from the quantity $(N_1, N_2)$ of parameter errors (PE(n)).

5. Method according to one of the preceding claims, **characterized in that** said errors in a parameter representative of the control of the vehicle by the driver are errors in predictions of angles (PE(n)) of a steering wheel.

6. Computer program comprising program code instructions for executing the steps of the method according to one of Claims 1 to 5 when said program is executed on a computer.

7. Device for evaluating the alertness of a vehicle driver by means of a sensor (11, 14) of a parameter representative of the control of the vehicle by the driver, **characterized in that** it comprises an on-board computer (10) on which a program according to Claim 6 is installed.

8. Motor vehicle **characterized in that** it comprises a device according to Claim 7.

*Fig. 1*

*Fig. 2*

*Fig. 2 bis*

110 — $I := L_1 := L_2 := 0$
$\forall c, P_1(c) := P_2(c) := 0$

111 — Q6: classe $(PE(n)) = c$

112 — $P_1(c) := P_1(c)+1/N_1$
$P_2(c) := P_2(c)+1/N_2$
$d := 0$

$\neg$ Q7

113 — Q7: $c=(N_c+1)/2$

115

116 — $r := 1$
$L_1 := L_1 + 1$
$L_2 := L_2 + 1$

114 — $r := 0$

$\neg$ Q8 $^{\wedge}$ r=0

$\neg$ Q8 $^{\wedge}$ r=1 — 119

121 — Q8: $d < L_1 - r$

117

120 — $B_1(L_1 - d) := c$
$B_2(L_1 - d) := 0$

122 — $B_1(L_1 - d) := B_1(L_1 - d - r)$
$B_2(L_1 - d) := B_2(L_1 - d - r) + (1-r)$
$d := d + 1$

$I = N_1$

$N_2 \leq I < N_1$

127

125

123 — $I < N_2$

LT := 1

CT := 1 — 126

124 — $I := I + 1$

128

**Fig. 3**

**Fig. 4**

**Fig. 5**

150 — $\forall$ c, P(c) := L := I := 0

151 — Q6: classe (PE(n)) = c

152 — P(c) := P (c)+1/N
d := 0

153 — Q7: c=(N$_c$+1)/2

159 — $\neg$ Q7

160 — L := L +1

161 — Q14: d < L -1

162 — B$_1$(L − d) := B$_1$(L −d -1)
B$_2$(L − d) := B$_2$(L −d -1)
d:= d + 1

163 — $\neg$ Q14

164 — B$_1$(1) := c ; B$_2$(1) := 0

155 — Q13: d < L

156 — B$_2$(L − d) := B$_2$(L − d)+1
d:= d + 1

157 — $\neg$ Q13

167 — N $\leq$ I

171 — $\neg$ Q15

169 — Q15: B$_2$(L)+L = N

165 — I < N

172 — k := (N$_c$+1)/2
P(k) := P(k) − 1/ N

170 — k := B$_1$(L)
P(k) := P(k) − 1/ N
L := L - 1

166 — I := I + 1

*Fig. 6*

17

## RÉFÉRENCES CITÉES DANS LA DESCRIPTION

**Documents brevets cités dans la description**

- EP 2160313 A
- EP 2472493 A
- US 2014039722 A
- WO 2014006327 A
- EP 1235052 A